# EUROPEAN PATENT APPLICATION

(11) **EP 2 996 010 A1**
(43) Date of publication of application: **16.03.2016**
(21) Application number: 14184215.3
(22) Date of filing: 10.09.2014
(51) Int. Cl.: G05D 16/20, F16K 49/00

(54) **Pressure regulating and reducing gas flow device and method for pressure regulating and pressure reducing a gas flow**

(71) Applicant: RWE Gas Net, s.r.o., 401 17 Usti nad Labem (CZ)
(72) Inventor: Filip, Martin, 15500 Praha 5 (CZ)
(74) Representative: Kierdorf Ritschel Richly

(57) **Abstract**

The invention refers to a pressure regulating and reducing gas flow measuring device allowing to supply natural gas at a variable rate of flow under a predetermined pressure from a source of gas under high pressure, the device comprising a main pressure regulator (7), a pilot pressure regulator (8) and means for preheating a gas flow. The main pressure regulator (7) is arranged in a main gas supply line (3), the pilot pressure regulator (8) is arranged in a pilot gas circuit (9). The pilot gas circuit (9) is connected parallel to the main gas supply line (3). Said means for preheating the gas flow are only provided in the pilot gas circuit (9).

## Description

The invention refers to a pressure regulating and reducing gas flow device allowing to supply natural gas at a variable rate of flow under a predetermined pressure from a source of gas under high pressure.

The invention more particular relates to a pressure regulating and reducing gas flow measuring device.

The pressure regulating and reducing gas flow device according to the invention is for instance a device allowing to supply gas at a variable rate of flow and under a predetermined pressure adjustable for instance to a substantially constant value to any industrial installation from a source of gas under a high pressure, and to preferably simultaneously measure with a high accuracy the amount of gaseous fluid supplied to said installation. The device according to the invention may also be for supplying natural gas to a medium pressure or low pressure gas network.

Advantageously the pressure regulating and reducing gas flow device according the invention is a gas regulation station with a capacity of below 1,000 m³/h. The regulation station or regulation device may be provided for reducing the pressure from a high pressure transportation network with natural gas compressed to a pressure of about 40 bar to a medium pressure network with natural gas with a pressure of about 25 to 1 bar.

Gas in the sense of the current application means a combustible gas on the basis of methane, in particular so called "natural gas"
As reducing of the pressure of the gas is a throttling process which induces a temperature change of the gas due to the well-known Joule-Thomson expansion, this normally requires preheating of the gas prior to the pressure reduction so that the gas does not cool below the dew point which would of course cause corrosion issues in the gas pipeline as well as clogging of the regulation installation due to freezing.

Means for preheating the gas prior to decompression/pressure reduction of course are fairly energy consuming so that a pressure regulating and reducing gas flow device normally requires external power supply in order to be able to preheat the gas prior to its decompression.

Of course, also if the pressure regulating and reducing gas flow device is designed as a gas flow metering device in order to simultaneously measure with a high accuracy the amount of gas supply to the network or to the installation of the industrial customer, the device also requires external power supply which sometimes may cause issues, particularly if the pressure regulating and reducing gas flow device is to be set up in a countryside environment, where the infrastructure is not very well developed.

It is thus an object of the present invention to provide a pressure regulating and reducing gas flow device allowing to supply natural gas at a variable rate of flow under a predetermined pressure from a source of gas under high pressure to a medium or low pressure network or to an industrial customer with a specific demand of gas pressure which also may be set up in a countryside environment or an environment with a poorly developed infrastructure.

It is moreover an object of the current invention to provide a method for pressure regulating and pressure reducing a gas flow which is suitable for applying in such an environment.

These and other objects are achieved by the features of the independent claims. Other aspects of the invention are covered by the dependant claims.

In one aspect of the present invention, there is provided a pressure regulating and reducing gas flow device allowing to supply natural gas at a variable rate of flow under a predetermined pressure from a source of gas under high pressure, the device comprising a main pressure regulator and a pilot pressure regulator and means for preheating a gas flow, the main pressure regulator being arranged in a main gas supply line, the pilot pressure regulator being arranged in a pilot gas circuit, wherein the pilot gas circuit is connected parallel to the main gas supply line, wherein said means for preheating the gas flow are only provided in the pilot gas circuit.

In other words, although the pressure regulating and reducing gas flow device according to the current invention provides for preheating a gas flow, no preheating device or preheating installation is provided in the main gas supply line, but rather exclusively in a pilot gas circuit which serves for operating a pilot pressure regulator which in turn controls the pressure regulator.

Due to this design, advantageously, only a small amount of gas flowing in the pilot gas circuit has to be preheated which is remarkably less energy-consuming than preheating the gas flow in the main gas flow. This preheating is in order to ensure the operability of the pilot pressure regulator in terms of freezing so that under any circumstances it is guaranteed that pressure regulating or pressure reducing of the main gas flow may be achieved, even though the temperature of the gas within the main gas supply line falls below the dew point.

But not only that it is less energy-consuming to only preheat a minor gas flow in the pilot gas circuit, also such a design allows for providing relatively simple and inexpensive equipment for preheating.

A pilot gas circuit in the sense of the current application is preferably a gas circuit, which is parallel to the main gas supply line and through which only a partial flow of gas flows, in order to operate a pilot pressure regulator which in turn controls the pressure regulator in the main gas supply line, i.e. the main pressure regulator.

A pressure regulator in the sense of the instant application is a kind of adjustable valve or throttle which allows expansion of the gas from a first higher pressure level to a second lower pressure level and which is preferably adjustable so that the reduced pressure may be adjusted.

The pressure regulator according to the current invention may be controlled electronically depending on the volume of gas to be supplied.

In one particularly advantageous embodiment of the pressure regulating and reducing gas flow device according to the invention, the device comprises means for generating electrical energy independent from an external power supply, in particular for preheating the gas flow independently from an external power supply.

Said means for generating electrical energy may comprise at least one turbine and an associated electric generator. The turbine with the generator may be arranged in the main gas supply line so the kinetic energy of the gas flow may be utilized for generating electric power, which in turn can be used for preheating the gas in the pilot gas circuit. The electrical energy may also be utilized for other electrical appliances included in the pressure regulating and reducing gas flow device according to the invention. The electrical energy might for instance be used for a metering device and/or monitoring electronics which might be part of the pressure regulating and reducing gas flow device according to the invention. The monitoring electronics may comprise pressure and temperature detecting means.

The pressure regulating and reducing gas flow device according to the invention is preferably independent of any external electrical power supply. Electrical power might be provided by one or more of a wind turbine generator, photovoltaic panels and rechargeable batteries.

In one preferred embodiment of the pressure and regulating and gas flow device according to the invention comprises means for separation of a compressed gas into a hot steam and a cold stream for preheating the gas flow in the pilot gas circuit. Said means for separation of a compressed gas may include at least one vortex tube which is also known as the Ranque-Hilsch vortex tube, which is a mechanical device that separates a compressed gas into hot and cold streams. The air emerging from the hot end can theoretically reach temperatures of about 200, °C depending on the operational pressure, and may be utilized for transfer of heat to the pilot gas circuit, i.e. to the gas flow within the pilot gas circuit. Such vortex tube normally includes a chamber in which pressurized gas is injected tangentially and accelerated to a high rate of rotation.

Such vortex tubes or whirl tubes produce heat at flows very close to the nominal capacity. If the vortex tube may not be operated at its nominal capacity, additional preheating energy may be supplied by other energy sources as above mentioned.

At a an operational pressure of about 25 bar as this for example would be the operational pressure of the pressure regulating and reducing gas flow device of the current invention the gas emerging from the hot end can reach temperatures between 15 and 20 °C.

In one advantageous embodiment the pressure regulating and reducing gas flow device according to the invention comprises means for storing electrical energy.

Preferably the gas flow device comprises at least one of a wind turbine, a photovoltaic system, an expansion turbine or a rechargeable battery.

A rechargeable battery as means for storing electrical energy might be present anyway in the event that the device comprises a wind turbine, a gas turbine or a photovoltaic system.

The pressure regulating and reducing gas flow device according to the current invention is preferably designed as a pressure regulating and reducing gas flow metering device. The pressure regulating and reducing gas flow device is preferably arranged in a housing, which houses the pressure regulator as well as the pilot pressure regulator arranged within the pilot gas circuit. The housing moreover includes the rechargeable batteries, a switchboard, a gas turbine with an electrical generator and all other electrical appliances required for independently operating the pressure regulating and reducing gas flow device, i.e. independent from any external power source.

In one preferred embodiment an outer surface of the main gas supply line at least downstream of the pressure regulator is galvanized or painted or otherwise coated, so that any build up of condensate due to the fact, that the temperature of the gas is below the dew point, does not induce any corrosion at the outer surface of the gas supply line.

According to another aspect of the current invention, there is provided a method for pressure regulating and pressure reducing a gas flow of natural gas from a source of gas under a first pressure to a second pressure which is lower than the first pressure, preferably by using a pressure regulating and reducing gas flow device as explained before, the method comprising establishing a main gas supply flow, regulating the pressure of the main gas supply flow, establishing a pilot gas flow in a pilot gas circuit and regulating the pressure within the pilot gas circuit, wherein the gas in the pilot gas circuit is preheated prior to a pressure reduction and wherein the gas of the main gas supply flow remains unheated before and after the pressure reduction.

The method may include that preheating within the pilot gas circuit is conducted by separation of the compressed gas into a hot stream and into a cold stream, preferably by using a vortex tube.

In one aspect of the method according to the current invention, the method comprises monitoring of the temperature of the gas in the pilot gas circuit and preheating the gas in the pilot gas circuit depending on the measured temperature.

The invention will hereinafter be explained by way of example with reference to the accompanying drawings in which:
- Figure 1: shows a schematic view of a pressure regulating and reducing gas flow device according to the current invention,
- Figure 2: shows a schematic chart of a pressure regulating and reducing gas flow device according to the invention, and
- Figure 3: shows a schematic chart of the pilot gas circuit in relation to the main gas supply line.

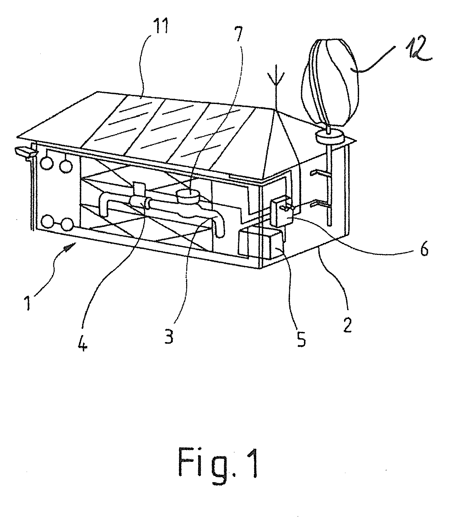

For the sake of simplicity, the pressure regulating and reducing gas flow device according to the invention is hereinafter referred to as regulation station 1. The regulation station 1 comprises a housing 2 (see figure 1), which accommodates a part of a main gas supply line 3 from a high pressure gas transportation network to a medium pressure gas supply network. A gas flow within the high pressure gas transportation network may have a pressure of about 40 bar The medium pressure gas supply network may have the pressure in the range of 25 to 1 bar. In the main gas supply line 3, there is arranged a gas turbine 4, which is a pure expansion machine with an associated electrical generator. The gas turbine 4 utilizes a part of the kinematic energy of the gas flow in order to produce electrical energy, which is stored in a set of rechargeable batteries 5 also accommodated in the housing 2. The rechargeable batteries 5 are connected via switch board 6 to a main pressure regulator 7 for further reducing the gas pressure to the gas pressure predominant in the middle pressure gas supply network.

In this application, the main pressure regulator is also referred to as pressure regulator.

The main pressure regulator 7 is operated, i.e. controlled via a pilot pressure regulator 8, which is arranged in a pilot gas circuit 9. As explained hereinafter, the pilot gas circuit 9 includes a vortex tube 10 for preheating the gas flow within the pilot gas circuit 9. Within the vortex tube 10, separation of compressed gas into a hot and cold stream is achieved, the temperature of the hot end is being transferred via a heat exchanger indirectly or directly to the gas flow within the pilot gas circuit 9.

Preheating of the gas within the pilot gas circuit 9 therefore generally does not require any additional energy, the energy for preheating is resulting solely from the physical effect of the Ranque-Hilsch vortex tube. However, the vortex tube 10, which is commonly also referred to as Ranque-Hilsch vortex tube may only produce heat at a gas flow, which is close to the nominal capacity of the vortex tube 10. Depending on the demand of gas, the gas flow within the pilot gas circuit 9 may vary, so that under these circumstances surplus energy might be required to achieve preheating of the gas in the pilot gas circuit 9.

Therefore, other preheating means which are not shown in the drawings, may receive energy from the rechargeable batteries 5, which have been charged by either the gas turbine 4 or other (additional) energy sources like for instance photovoltaic panel 11 on the roof of the regulating station or from a wind turbine generator 12.

The photovoltaic panel 11 as well as the wind turbine generator 12 are also connected to the switch board 6.

A person skilled in the art will appreciate that the regulation station 1 may comprise either one of a photovoltaic panel, a wind turbine generator, or a gas turbine, or all of these facilities. Other combinations are within the scope of the current invention.

The rechargeable batteries 5 may also receive energy from other sources of renewable energy.

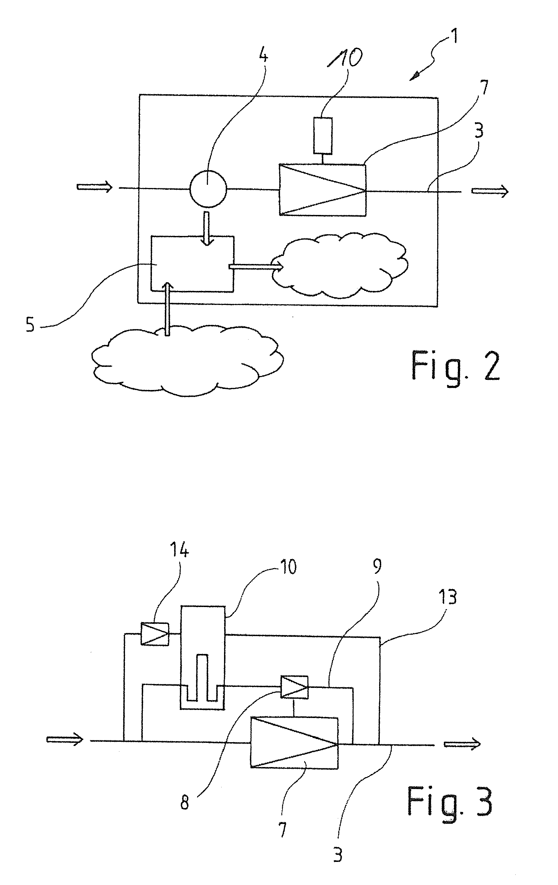

A schematic chart of the regulation station is shown in figure 2. As shown in figure 2, the main pressure regulator 7 is situated downstream the gas turbine 4, the later is optional.

As shown in Fig.3 which is an view of the pilot gas circuit 9 the main pressure regulator 7 is operated, i.e. controlled by the pilot pressure regulator 8.The main pressure regulator 7, and the gas turbine are arranged in line, i.e. in series in the main gas supply line 3.

As shown in figure 3, parallel to the main gas supply line 3, which is branched of from a high pressure gas transportation network, there is provided the pilot gas circuit 9 including the vortex tube 10 and the pilot pressure regulator 8. Also parallel to the main gas supply line 3, there is provided an additional control circuit 13 for the vortex tube 10, which also includes a flow regulator 14 upstream the vortex tube 10. The flow regulator 14 controls gas injection into a chamber of the vortex tube 10. The gas is of course taken from the main gas supply line 3 via control circuit 13.

### Reference numerals

- 1: regulation station
- 2: housing
- 3: main gas supply line
- 4: gas turbine
- 5: rechargeable batteries
- 6: switch board
- 7: main pressure regulator
- 8: pilot pressure regulator
- 9: pilot gas circuit
- 10: vortex tube
- 11: photovoltaic panel
- 12: wind turbine generator
- 13: control circuit
- 14: flow regulator

## Claims

1. Pressure regulating and reducing gas flow device allowing to supply natural gas at a variable rate of flow under a predetermined pressure from a source of gas under high pressure, the device comprising a main pressure regulator (7), a pilot pressure regulator (8) and means for preheating a gas flow, the main pressure regulator (7) being arranged in a main gas supply line (3), the pilot pressure regulator (8) being arranged in a pilot gas circuit (9), wherein the pilot gas circuit (9) is connected parallel to the main gas supply line (3), wherein said means for preheating a gas flow are only provided in the pilot gas circuit (9).

2. Pressure regulating and reducing gas flow device according to claim 1, **characterized in that** it comprises means for generating electrical energy independently from an external power supply, in particular for preheating the gas flow independently from an external power supply.

3. Pressure regulating and reducing gas flow device according to anyone of claims 1 or 2, **characterized in that** said means for generating electrical energy comprise at least one turbine and an associated electric generator.

4. Pressure regulating and reducing gas flow device according to anyone of the preceding claims, **characterized in that** it comprises means for separation of a compressed gas into a hot stream and a cold stream for preheating the gas flow in the pilot gas circuit (9).

5. Pressure regulating and reducing gas flow device according to anyone of claims 1 to 4, **characterized in that** said means for separation of a compressed gas includes at least one vortex tube (10).

6. Pressure regulating and reducing gas flow device according to anyone of claims 2 to 5, **characterized in that** it comprises means for storing electrical energy.

7. Pressure regulating and reducing gas flow device according to anyone of the preceding claims, **characterized in that** it additionally comprises at least one of a wind turbine generator (12), a photovoltaic system, an expansion turbine as a gas turbine (4), or a rechargeable battery (5).

8. Pressure regulating and reducing gas flow device according to anyone of the preceding claims, **characterized in that** an outer surface of the main gas supply line (3) at least downstream of the main pressure regulator (7) is galvanized or painted or coated with an anti-corrosion coating.

9. Method for pressure regulating and pressure reducing a gas flow of natural gas from a source of gas under a first pressure to a second pressure, which is lower than the first pressure, preferably by using a regulating and reducing gas flow device according to anyone of the preceding claims, the method comprising establishing a main gas supply flow, regulating the pressure of the main gas supply flow, establishing a pilot gas flow in a pilot gas circuit (9) and regulating the pressure within the pilot gas circuit (9), wherein the gas in the pilot gas circuit (9) is preheated prior to a pressure reduction, and wherein the gas of the main gas supply flow remains unheated before and after the pressure reduction.

10. Method according to claim 9, **characterized in that** preheating within the pilot gas circuit (9) is conducted by separation of the compressed gas into a hot stream and into a cold stream, preferably by using a vortex tube (10).

11. Method according to anyone of claims 9 to 10, **characterized in that** it comprises monitoring of the temperature of the gas in the pilot gas circuit (9) and preheating the gas in the pilot gas circuit (9) depending on the measured temperature.
